# FASCICULE DE BREVET EUROPEEN

(11) **EP 4 363 253 B1**
(45) Date de publication et mention de la délivrance du brevet: **16.07.2025**
(21) Numéro de dépôt: 22731270.9
(22) Date de dépôt: 18.05.2022
(51) Int. Cl.: B60K 1/04, H01M 10/44, B60L 53/16

(54) **VEHICULE AUTOMOBILE COMPRENANT UNE BATTERIE**
KRAFTFAHRZEUG MIT EINER BATTERIE
MOTOR VEHICLE COMPRISING A BATTERY

(30) Priorité: 01.07.2021 FR 2107124
(43) Date de publication de la demande: 08.05.2024
(73) Titulaire: Stellantis Auto SAS, 78300 Poissy (FR)
(72) Inventeur: BALENGHIEN, Olivier, 93390 CLICHY SOUS BOIS (FR); NGUYEN, Minh, 78800 HOUILLES (FR); VALTER, Johnny, 95870 BEZONS (FR)
(74) Mandataire: PSIP
(86) Numéro de dépôt international: PCT/FR2022/050944
(87) Numéro de publication internationale: WO 2023/275449

(56) Documents cités:
- DE-A1- 102013 010 283
- US-A1- 2011 043 355
- US-A1- 2015 329 000

## Description

L'invention concerne les véhicules comprenant une batterie, un habitacle et un dispositif de commande de recharge de la batterie actionnable de d'extérieur de cet habitacle. L'invention concerne également un procédé de commande de recharge de cette batterie.

On connait du document de brevet FR-A1-3052113 un tel véhicule. Ce véhicule comprend en particulier une batterie et une trappe de rechargement électrique abritant une prise de charge pour cette batterie, cette prise étant implantée sur un élément de carrosserie du véhicule. Cette trappe, si elle est ouverte, donne accès à la prise de charge et à un bouton de commande pour la recharge de cette batterie, en particulier à un bouton de recharge différée de cette batterie.

On connait du document de brevet DE-A1-102013010283 un procédé pour faire fonctionner un dispositif de raccordement électrique d'un véhicule afin de le coupler électriquement à une source d'énergie électrique, un déverrouillage s'effectuant en raison d'un actionnement manuel d'un élément d'actionnement du dispositif de raccordement.

On connait du document de brevet US-A1-2015329000 un boîtier de commande intégré au câble pour charger un véhicule électrique et son procédé de charge programmée.

On comprendra par recharge différée, dans tout le texte de ce document, une recharge programmée selon un horaire de début et/ou de fin de recharge prédéterminé, cet horaire pouvant être un horaire fixe, par exemple correspondant à des heures de tarification basses du fournisseur d'électricité d'un réseau terrestre, ou un horaire sur mesure, modifiable et choisi par le conducteur du véhicule.

Malheureusement, lorsque ce véhicule est en recharge via cette prise de charge, la trappe est ouverte et ce bouton peut donc être actionné par toute autre personne que le conducteur, imposant la recharge différée alors que le véhicule est par exemple en cours de recharge, cette recharge différée annulant la recharge en cours.

Le but de l'invention est de remédier à ce manque en proposant une sécurisation d'un dispositif de commande.

A cet effet, l'invention a pour objet un véhicule automobile comprenant :
- un habitacle,
- une batterie de stockage d'énergie électrique,
- un moyen de recharge pour recharger la batterie,
- un dispositif de contrôle du moyen de recharge,
- un dispositif de commande de recharge de la batterie, actionnable de d'extérieur de cet habitacle par un conducteur ou un passager du véhicule, et apte à transmettre au dispositif de contrôle une commande de recharge,

ce dispositif de contrôle comprenant un dispositif de neutralisation du dispositif de commande,
   - une carrosserie comprenant un ouvrant ayant une position fermée bloquant l'accès à cet habitacle, et
   - un moyen de verrouillage de l'ouvrant à cette position fermée,
ce dispositif de neutralisation étant configuré de sorte qu'il neutralise le dispositif de commande si le moyen de verrouillage verrouille l'ouvrant à sa position fermée, ce dispositif de neutralisation comprenant un dispositif de temporisation configuré pour enclencher une temporisation prédéterminée si le moyen de verrouillage verrouille l'ouvrant à sa position fermée, ce dispositif de neutralisation étant configuré de sorte qu'il neutralise le dispositif de commande si cette temporisation est écoulée.

On comprendra par neutralisation, dans tout le texte de ce document, le fait que :
- le dispositif de commande ne peut plus être actionné, par exemple n'est plus accessible, et/ou
- son actionnement n'a plus d'effet ou est désactivé.
Ainsi dans tous les cas, la commande de recharge après que le dispositif de commande soit neutralisé reste égale à la commande de recharge précédant cette neutralisation.

L'habitacle du véhicule sera compris comme l'espace dans lequel se trouvent les occupants du véhicule, dont le conducteur et le ou les passagers. Cet espace peut être ouvert, par exemple un véhicule cabriolet, ou fermé, par exemple par une carrosserie comprenant un pavillon.

Par conséquent, un dispositif de commande actionnable de d'extérieur de cet habitacle peut être un dispositif de commande manuel à l'intérieur de l'habitacle dont l'espace est ouvert, tout comme un dispositif de commande à distance à l'intérieur de l'habitacle dont l'espace est fermé.

Cette disposition permet que, même si une tierce personne actionne ou tente d'actionner le dispositif de commande, alors que par exemple le conducteur et/ou les passagers ne sont pas à proximité du véhicule, dispositif de neutralisation permettra que la commande de recharge ne soit pas modifiée et, le conducteur ou l'utilisateur du véhicule retrouvera son véhicule dans un état de charge précédemment prévu.

Selon un mode de réalisation de l'invention, cette temporisation est d'une durée de 5 à 20 secondes, notamment 10 secondes.

Selon un mode de réalisation de l'invention, la commande de recharge est une commande parmi un ensemble de commande comprenant :
- une commande de recharge différée,
- une commande de recharge immédiate,
- une commande d'arrêt de recharge,
- une commande de décharge de la batterie.

Selon un mode de réalisation de l'invention, le dispositif de commande actionnable est un bouton.

Selon un mode de réalisation de l'invention, ce bouton est un bouton parmi un ensemble de boutons comprenant un bouton tactile, un bouton poussoir, un bouton à multiples positions.

Selon un mode de réalisation de l'invention, le moyen de recharge comprend une prise de recharge destinée à être raccordée à un réseau électrique terrestre.

Selon un mode de réalisation de l'invention, ce moyen de recharge comprend un chargeur embarqué raccordé à cette prise de recharge, et une rallonge électrique apte à raccorder la prise de recharge au réseau électrique terrestre.

Selon un mode de réalisation de l'invention, ce véhicule comprend une machine motrice électrique alimentée par la batterie de stockage d'énergie électrique.

D'autres particularités et avantages apparaîtront à la lecture de la description ci-après d'un mode particulier de réalisation, non limitatif de l'invention, faite en référence aux figures dans lesquelles :
[Fig 1] : représente un exemple d'architecture électrique d'un véhicule selon l'invention.
[Fig 2] : représente un dispositif de trappe de recharge du véhicule de la figure 1.

Il est à garder à l'esprit que les figures sont données à titre d'exemples et ne sont pas limitatives de l'invention. Elles constituent des représentations schématiques de principe destinées à faciliter la compréhension de l'invention. En outre, dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées. Les références des éléments inchangés ou ayant la même fonction sont communes à toutes les figures, et les variantes de réalisation.

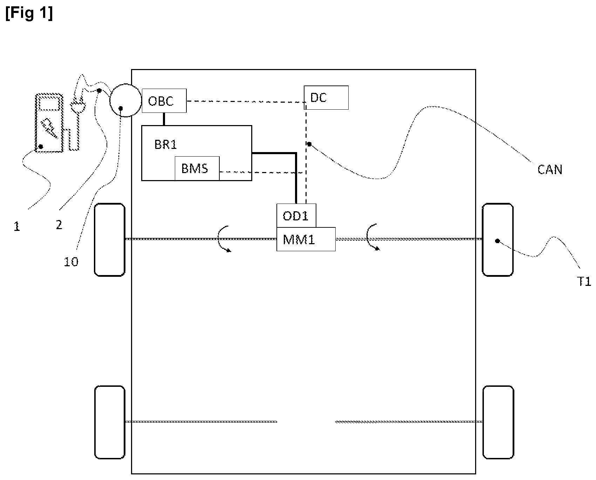

La figure 1 représente un exemple d'architecture d'un véhicule à motricité électrique applicable à l'invention.

Le véhicule de la figure 1 comprend :
- un habitacle,
- une batterie de stockage d'énergie électrique qui est une batterie principale BR1 de traction, dite batterie BR1 dans tout le texte de ce document, rechargeable, fonctionnant sous une première haute tension continue par exemple 400V, ou encore entre 350V et 800V, et comprenant par exemple un capteur de température renvoyant une valeur de température, un capteur de courant, un capteur de tension, un module comprenant une cellule électrochimique de stockage d'énergie électrique, un moyen de refroidissement du module et/ou de la cellule, par exemple par un fluide caloporteur circulant dans un circuit en contact thermique avec le module et/ou la cellule, cette batterie BR1 étant généralement mais pas obligatoirement logée sous un plancher de l'habitacle,
- un moyen de contrôle BMS de la batterie BR1, dit contrôleur de la batterie, ici intégré à la batterie BR1, et apte par exemple à déterminer un état de charge ou d'énergie de la batterie,

- un premier réseau électrique haute tension comprenant des faisceaux haute tension travaillant sous une première tension, à la tension de la batterie BR1,
- un moyen de recharge pour la batterie, comprenant un chargeur embarqué OBC, et étant couplé à la batterie par un premier faisceau haute tension de charge du premier réseau,
- une première chaîne de transmission comportant une machine motrice électrique MM1 comprenant un onduleur OD1, et fournissant du couple pour entraîner au moins un train T1 à partir de l'énergie stockée dans la batterie BR1 rechargeable, cette machine motrice MM1 étant couplée à la batterie BR1 via l' onduleur OD1 par un deuxième faisceau haute tension du premier réseau,
- un réseau de communication CAN,
- un dispositif de contrôle DC, dit de supervision du véhicule, séparé ou non du contrôleur de la batterie BMS, et contrôlant par exemple le moyen de recharge.

Ce réseau de communication CAN, par exemple un bus de données série CAN pour l'acronyme anglais « Controller Area Network » mais d'autres type de bus sont envisageables, couple entre eux :
- le contrôleur de la batterie BMS,
- un moyen de contrôle (non représenté) de l'onduleur OD1,
- le dispositif de contrôle DC.

Ce réseau de communication CAN est représenté sur la figure 1 par un trait en pointillés, alors que le premier réseau électrique haute tension est représenté par un trait plein « gras ».

Ce véhicule comprend par exemple un deuxième réseau électrique basse tension, non représenté, par exemple 12 ou 24 V, couplé au premier réseau via un convertisseur de courant. Ce véhicule comprend par exemple une batterie secondaire, dite de servitude, raccordée à ce deuxième réseau électrique basse tension, cette batterie secondaire travaillant sous une deuxième tension de 12 ou 24 V par exemple, et alimentant, entre autre, le contrôleur de la batterie BMS, le moyen de contrôle (non représenté) de l'onduleur OD1, le dispositif de contrôle DC.

On entend par « machine motrice électrique », dans tout le texte de ce document, une machine (ou un moteur) électrique agencé(e) de manière à fournir ou récupérer du couple pour déplacer un véhicule, soit seul(e), soit en complément d'au moins une éventuelle autre machine motrice électrique ou thermique (comme par exemple un moteur thermique (réacteur, turboréacteur ou moteur chimique)).

Dans l'exemple illustré non limitativement, la chaîne de transmission est de type tout électrique et peut comprendre une unique machine motrice électrique MM1. Mais l'invention n'est pas limitée à ce type de chaîne de transmission. En effet, la chaîne de transmission pourrait être de type hybride en comportant en complément une machine motrice thermique associée à au moins un train (par exemple le second).

On comprendra par batterie principale, dite de traction BR1 dans tout le texte de ce document, une batterie fonctionnant sous la première tension du premier réseau qui est supérieure à la deuxième tension du deuxième réseau, et qui alimente en courant la ou les machines motrices MM1.

La chaîne de transmission comprend ici, en complément de la machine motrice électrique MM1, un arbre de transmission et des moyens de couplage de cette première machine motrice à cet arbre de transmission. Le contrôle d'au moins la machine motrice électrique MM1 et des moyens de couplage est assuré par le dispositif de contrôle DC, dit de supervision du véhicule, via le réseau de communication CAN. Le dispositif de contrôle DC contrôle l'onduleur OD1 de la machine motrice MM1.

Les moyens de couplage sont ici chargés de coupler/découpler la machine motrice électrique MM1 à/de l'arbre de transmission, sur ordre du dispositif de contrôle DC, afin de communiquer du couple qu'elle produit et qui est défini par une consigne (de couple ou de régime), grâce à l'énergie électrique stockée dans la batterie BR1, à l'arbre de transmission. Ce dernier est ici couplé au train T1 (ici de roues).

Par exemple, le train T1 est situé à l'avant du véhicule V, et de préférence. Mais dans une variante ce train T1 pourrait être situé à l'arrière du véhicule.

La batterie BR1 est agencée pour stocker de l'énergie électrique. Elle peut notamment être rechargée ou chargée via le moyen de recharge et donc le chargeur embarqué OBC configuré en phase de recharge ou de charge de sorte à recharger ou charger la batterie BR1.
Ce moyen de recharge, outre le chargeur embarqué OBC, comprend par exemple mais pas nécessairement :
   - une rallonge électrique 2, amovible et optionnelle et
   - un dispositif de trappe de rechargement 10 comprenant une prise de recharge 12 raccordée au chargeur embarqué OBC.
la rallonge électrique 2 est apte à raccorder la prise de recharge 12 au réseau électrique terrestre via par exemple une prise de courant domestique en l'absence de borne de recharge 1. En présence d'une borne de recharge 1, comme illustré sur la figure 1, soit cette borne 1 intègre un câble de recharge apte à se raccorder directement à la prise de recharge 12, auquel cas la rallonge 2 n'est pas nécessaire, soit le câble de recharge n'est pas présent et le conducteur utilisera alors la rallonge 2. La borne de recharge 1 tout comme la prise domestique, sont raccordées au réseau de distribution de courant terrestre.

On notera que l'invention s'applique également à un moyen de recharge comprenant une plaque de recharge par induction, apte à s'interfacer avec une borne de recharge par induction. La rallonge électrique 2 n'est pas nécessaire également dans ce cas, ainsi que le dispositif de trappe de rechargement 10 et en particulier la prise de recharge 12.

La rallonge électrique 2, lorsqu'elle est utilisée, est raccordée au chargeur embarqué OBC au moyen par exemple de la prise de charge (ou de recharge) 12 du dispositif de trappe de recharge 10, accessible de l'extérieur de l'habitacle. Un dispositif de commande 17, 18, actionnable de d'extérieur de cet habitacle par un conducteur ou un passager du véhicule, est par exemple disposé à proximité de la prise 12, et est apte à transmettre au dispositif de contrôle DC une commande de recharge. Ce dispositif de commande 17, 18 est par exemple indépendant du dispositif de trappe de recharge 10, en particulier si ce dispositif de trappe de recharge 10 n'est pas présent comme par exemple la recharge inductive, est peut-être localisé à n'importe quel endroit du véhicule accessible depuis l'extérieur de l'habitacle, en particulier si c'est un dispositif de commande 17, 18 à distance.

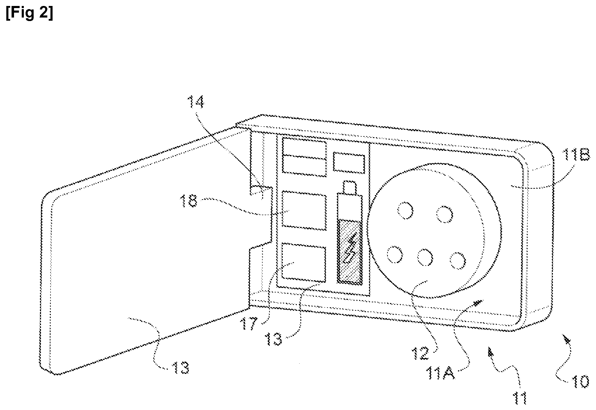

Un exemple de dispositif de commande 17, 18 et de prise de charge 12 est donné en figure 2, et incorpore dans le présent texte, par référence au document de brevet FR-A1-3052113, le dispositif de trappe de rechargement 10 qui y est décrit, à savoir :

Ce dispositif de trappe de rechargement 10 comprend un boîtier 11 présentant une ouverture 11A en façade et destiné à être implanté sur un élément de carrosserie du véhicule accessible de l'extérieur de l'habitacle, par exemple dans la partie médiane d'une calandre juste en dessous d'un capot, ainsi que la prise de charge 12 logée dans ce boîtier 11 en étant fixée à sa paroi de fond 11B.

Cette prise de charge 12 est connectée électriquement à des câbles de puissance (non visibles sur les figures) traversant de manière étanche le fond 11B de ce boîtier 11 et prévus pour être raccordés au chargeur embarqué OBC.

Ce dispositif de trappe de rechargement 10 comporte également un portillon 13 monté mobile entre une position fermée dans laquelle il obture l'ouverture 11A du boîtier 11 de sorte à dissimuler la prise de charge 12 et une position ouverte dans laquelle cette dernière est accessible pour permettre à l'utilisateur d'y brancher une fiche électrique de la rallonge 2 ou de la borne de recharge 1.

Ce portillon 13 est articulé en pivotement vis-à-vis du boîtier 11 selon un axe vertical par l'intermédiaire d'une charnière 14 ménagée sur l'un des deux bords latéraux de l'ouverture 11A.

Cette charnière 14 est avantageusement en col de cygne de sorte à présenter un axe d'articulation légèrement déporté vers l'extérieur de l'ouverture 11A de sorte à assurer un meilleur débattement du portillon 13 et à faciliter l'introduction de la fiche électrique.

De préférence, le pourtour de l'ouverture 11A du boîtier 11 porte un joint non représenté et apte à assurer l'étanchéité de la trappe de rechargement 10 lorsque le portillon 13 est en position fermée.

Ce dispositif de trappe de rechargement 10 comporte en outre :
- un moyen d'affichage, par exemple configuré pour afficher le mode de recharge en cours ou prévu ou l'état de la batterie BR1,
- et le dispositif de commande 17, 18 reliés au dispositif de contrôle DC du chargeur embarqué OBC, via par exemple le réseau CAN ou un faisceau dédié.

Ce dispositif de trappe de rechargement 10 comprend par exemple un écran plat tactile logé dans le boîtier 11 et fixé contre le fond 11B de ce dernier à proximité de la prise de charge 12, cet écran plat tactile comprenant le moyen d'affichage et le dispositif de commande 17, 18.

En variante, ce dispositif de commande 17, 18 est par exemple un bouton poussoir, éventuellement comprenant un dispositif d'éclairage dont la couleur ou le scintillement représente visuellement l'état du bouton poussoir.

L'écran illustré en figure 2 comprend notamment deux dispositif de commande comprenant un bouton tactile 17, 18 permettant respectivement à l'utilisateur de commander de manière immédiate ou différée le processus de charge de la batterie BR1 lorsque la prise de charge 12 est connectée à une source d'alimentation électrique externe, notamment la borne de recharge 1 ou la prise domestique.

Pour la commande de lancement différé, l'écran tactile affiche par exemple un menu de paramétrage permettant à l'utilisateur d'opter pour le type de programmation désiré (soit par indication de l'horaire de début de charge, soit par indication de l'horaire de fin de la charge) ainsi que de rentrer l'horaire souhaité.

De préférence, ce menu de paramétrage offre également à l'utilisateur la possibilité de consulter les statistiques d'utilisation de la batterie BR1 et en particulier le nombre de cycles de charges effectués ainsi que les durées de charge moyennes, mais ce n'est qu'un exemple.

Sur la figure 1, le chargeur embarqué OBC est représenté déporté de la batterie BR1, mais ce n'est pas obligatoire : il peut être intégré entièrement dans la batterie BR1, au niveau même des modules ou des cellules, tout comme l'onduleur OD1.

Le chargeur embarqué OBC, tout comme l'onduleur OD1, comprennent par exemple une série de transistors de puissance disposés en pont en « H », et un moyen de contrôle pilotant chaque transistor. Ce moyen de contrôle pilotant chaque transistor est par exemple en interface avec le réseau de communication CAN pour échanger des données ou des commandes avec le dispositif de contrôle DC.

Ce chargeur embarqué OBC est par exemple un convertisseur redresseur de courant alternatif - continue, et peut piloter la recharge en tension, en courant, ou tout autre cycle comprenant la phase de recharge, une phase de décharge, une phase de relaxation de la batterie BR1.

Ainsi, ce dispositif de contrôle DC, par le moyen du réseau de communication CAN, peut notamment désactiver la recharge ou limiter une puissance consommée par l'onduleur OD1, ou du chargeur embarqué OBC, voire supprimer par simple commande toute consommation de puissance de la batterie BR1.

En variante ou en combinaison, le véhicule comprend un moyen de limitation de la puissance électrique sortante ou entrante du module ou de la cellule de cette batterie BR1. Ce moyen de limitation est par exemple intégré dans le dispositif de contrôle DC contrôlant la puissance consommée par l'un quelconque de l'onduleur OD1, ou du chargeur embarqué OBC.

En variante encore, non représentée, ce moyen de limitation comprend une série d'interrupteurs ou contacteurs agencés de sorte à pouvoir isoler électriquement la batterie BR1, un module ou une cellule, et le dispositif de contrôle DC contrôle l'état de ces interrupteurs.

Ainsi ce véhicule automobile selon l'invention comprend :
- l'habitacle,
- la batterie BR1,
- le moyen de recharge OBC, 12, 2,
- le dispositif de contrôle DC du moyen de recharge OBC, 12, 2,
- le dispositif de commande 17, 18 de la recharge de la batterie BR1, actionnable de d'extérieur de cet habitacle par le conducteur ou le passager du véhicule, et apte à transmettre au dispositif de contrôle DC une commande de recharge, ce dispositif de contrôle DC comprenant un dispositif de neutralisation du dispositif de commande 17, 18.

Ce dispositif de neutralisation, contrôlé par le dispositif de contrôle DC, est par exemple un mécanisme de verrouillage d'une trappe recouvrant le dispositif de commande 17, 18. En particulier, cette trappe recouvrant le dispositif de commande 17, 18 est le portillon 13 si ce dernier peut être fermé bien que la prise de recharge 12 soit raccordée au réseau terrestre 1. Mais d'autres variantes sont possibles, et notamment si le dispositif de commande 17, 18 est un bouton électrique, le dispositif de neutralisation est par exemple un moyen d'isolement électrique de ce bouton électrique, voire une configuration du dispositif de contrôle DC telle que ce dispositif de contrôle DC ignore l'information venant du bouton électrique, notamment si ce dispositif de commande 17, 18 est le dispositif de commande 17, 18 à distance, par exemple par onde radio.

Ce véhicule automobile comprend :
- la carrosserie comprenant un ouvrant ayant une position fermée bloquant l'accès à cet habitacle,
- un moyen de verrouillage de l'ouvrant à cette position fermée,
ce dispositif de neutralisation étant configuré de sorte qu'il neutralise le dispositif de commande 17, 18 si le moyen de verrouillage verrouille l'ouvrant à sa position fermée.

Un exemple d'ouvrant est par exemple une portière du véhicule, le moyen de verrouillage de la portière étant un verrouillage d'une serrure électrifiée de la portière signifiant, lorsqu'il est actionné, que le conducteur et/ou les occupants ne sont plus dans l'habitacle. Bien entendu, le dispositif de neutralisation peut être configuré pour consolider l'information « absence des occupants de l'habitacle » en conditionnant, en plus du verrouillage de l'ouvrant, la neutralisation à un moyen de détection d'une fiche dans la prise de recharge 12, un moyen de détection d'une vitesse nulle du véhicule depuis un temps prédéterminé, un moyen de détection d'une non présence de pression sur des sièges du véhicule, un moyen de localisation du véhicule à une borne de recharge 1, cette liste n'étant pas exhaustive.

Ce dispositif de neutralisation comprend par exemple un dispositif de temporisation configuré pour enclencher une temporisation prédéterminée si le moyen de verrouillage verrouille l'ouvrant à sa position fermée ou si l'information « absence des occupants de l'habitacle » est consolidée, ce dispositif de neutralisation étant configuré de sorte qu'il neutralise le dispositif de commande 17, 18 si cette temporisation est écoulée.

Ainsi cette temporisation permet éventuellement au conducteur de changer d'avis sur le mode de recharge.

Cette temporisation est par exemple d'une durée de 5 à 20 secondes, notamment 10 secondes.

La commande de recharge est par exemple une commande parmi un ensemble de commande comprenant :
- une commande de recharge différée de la batterie BR1,
- une commande de recharge immédiate de la batterie BR1,
- une commande d'arrêt de recharge de la batterie BR1,
- une commande de décharge de la batterie BR1, notamment dans le réseau électrique terrestre 1 pour des fonctions dites de batteries intelligentes.

Le dispositif de commande 17, 18 actionnable est par exemple le bouton.

Ce bouton est par exemple le bouton tactile, poussoir, ou à multiples positions.

Le moyen de recharge OBC, 12, 2, comprend la prise de recharge 12 destinée à être raccordée au réseau électrique terrestre 1. Dans l'exemple précédent, cette prise de recharge 12 est commune avec le dispositif de trappe de rechargement 10.

Le moyen de recharge OBC, 12, 2, comprend le chargeur embarqué OBC raccordé à cette prise de recharge 12, et une rallonge électrique 2, optionnelle, apte à raccorder la prise de recharge 12 au réseau électrique terrestre 1.

Ce véhicule comprend par exemple la machine motrice électrique MM1 alimentée par la batterie de stockage d'énergie électrique BR1.

L'invention porte également sur un procédé mis en œuvre au moyen du dispositif de contrôle DC, mais ce n'est pas obligatoire, et comme explicité par de nombreux exemples en référence à la figure 1, cette mise en œuvre peut se faire par plusieurs dispositifs de contrôle répartis dans le véhicule, ou en partie regroupés dans un calculateur dédié, ces calculateurs recevant les données nécessaires de différents capteurs disposés dans le véhicule et dans la batterie, via le réseau CAN par exemple.

Ces calculateurs sont par exemple :
- le contrôleur de la batterie BMS,
- le moyen de contrôle du convertisseur,
- un boîtier de contrôle de la batterie secondaire,
- le moyen de contrôle de l'onduleur OD1,
- le dispositif de contrôle DC.

En outre, on notera que dans cet exemple le chargeur embarqué OBC est contrôlé par le dispositif de contrôle DC dit superviseur, mais ce chargeur embarqué OBC peut comprendre son propre dispositif de contrôle, en interface via le réseau CAN avec le dispositif de contrôle DC dit superviseur, et mettre en œuvre un procédé dédié au chargeur embarqué OBC selon l'invention.

Ces calculateurs comprennent un éventuel programme dédié, par exemple. Par conséquent, un calculateur, contrôleur, ou dispositif de contrôle selon l'invention, peuvent être réalisés sous la forme de modules logiciels (ou informatiques (ou encore « software »)), ou bien de circuits électroniques (ou « hardware »), ou encore d'une combinaison de circuits électroniques et de modules logiciels ».

Le dispositif de contrôle DC et/ou les calculateurs, comprennent les moyens d'acquisition, de traitement par instructions logicielles stockées dans une mémoire ainsi que les moyens de commande requis pour la mise en œuvre du procédé selon l'invention.

Ainsi l'invention porte sur un procédé de commande de recharge de la batterie BR1 du véhicule, ce véhicule comprenant :
- un habitacle,
- la batterie de stockage d'énergie électrique BR1,
- le moyen de recharge pour recharger la batterie OBC, 12, 2,
- le dispositif de contrôle DC du moyen de recharge OBC, 12, 2, mettant en œuvre le procédé,
- le dispositif de commande 17, 18 de recharge de la batterie BR1, actionnable de d'extérieur de cet habitacle par un conducteur ou un passager du véhicule,
- une carrosserie comprenant un ouvrant ayant une position fermée bloquant l'accès à cet habitacle,
- un moyen de verrouillage de l'ouvrant à cette position fermée,
ce procédé comprenant :
- une étape de transmission d'une commande de recharge de la batterie BR1 au dispositif de contrôle DC par le dispositif de commande 17, 18 ,
- une étape de neutralisation de cette commande transmise si le moyen de verrouillage verrouille l'ouvrant à sa position fermée.

Ce procédé exécute par exemple une temporisation d'une durée prédéterminée à l'instant où le moyen de verrouillage verrouille l'ouvrant à sa position fermée, l'étape de neutralisation étant exécutée à l'issue de cette temporisation. Cette temporisation est par exemple d'une durée de 5 à 20 secondes, notamment 10 secondes.

Bien entendu, le procédé comprend une étape de prise en compte de la commande de recharge si le moyen de verrouillage déverrouille l'ouvrant de sa position fermée.

## Revendications

1. Véhicule automobile comprenant :
- un habitacle,
- une batterie de stockage d'énergie électrique BR1,
- un moyen de recharge pour recharger la batterie OBC, 12, 2,
- un dispositif de contrôle DC du moyen de recharge OBC, 12, 2,
- un dispositif de commande 17, 18 actionnable de d'extérieur de cet habitacle par un conducteur ou un passager du véhicule, et apte à transmettre au dispositif de contrôle DC une commande de recharge, ce dispositif de contrôle DC comprenant un dispositif de neutralisation du dispositif de commande 17, 18,
- une carrosserie comprenant un ouvrant ayant une position fermée bloquant l'accès à cet habitacle,
- un moyen de verrouillage de l'ouvrant à cette position fermée,
ce dispositif de neutralisation étant configuré de sorte qu'il neutralise le dispositif de commande 17, 18 si le moyen de verrouillage verrouille l'ouvrant à sa position fermée, **caractérisé en ce que** ce dispositif de neutralisation comprend un dispositif de temporisation configuré pour enclencher une temporisation prédéterminée si le moyen de verrouillage verrouille l'ouvrant à sa position fermée, ce dispositif de neutralisation étant configuré de sorte qu'il neutralise le dispositif de commande 17, 18 si cette temporisation est écoulée.

2. Véhicule automobile selon la revendication 1, cette temporisation étant d'une durée de 5 à 20 secondes, notamment 10 secondes.

3. Véhicule selon l'une des revendications précédentes, la commande de recharge étant une commande parmi un ensemble de commande comprenant :
- une commande de recharge différée,
- une commande de recharge immédiate,
- une commande d'arrêt de recharge,
- une commande de décharge de la batterie.

4. Véhicule selon l'une des revendications précédentes, le dispositif de commande 17, 18 actionnable étant un bouton.

5. Véhicule selon la revendication 4, ce bouton étant un bouton parmi un ensemble de boutons comprenant un bouton tactile, un bouton poussoir, un bouton à multiples positions.

6. Véhicule selon l'une des revendications précédentes, le moyen de recharge OBC, 12, 2, comprenant une prise de recharge 12 destinée à être raccordée à un réseau électrique terrestre 1.

7. Véhicule selon la revendication 6, le moyen de recharge OBC, 12, 2, comprenant un chargeur embarqué OBC raccordé à cette prise de recharge 12, et une rallonge électrique 2 apte à raccorder la prise de recharge 12 au réseau électrique terrestre 1.

8. Véhicule selon l'une des revendications précédentes, ce véhicule comprenant une machine motrice électrique MM1 alimentée par la batterie de stockage d'énergie électrique BR1.

## Patentansprüche

1. Kraftfahrzeug, umfassend:
- einen Fahrgastraum,
- eine Speicherbatterie BR1 für elektrische Energie,
- eine Aufladeeinrichtung zum Aufladen der Batterie OBC, 12, 2,
- eine Gleichstromsteuereinrichtung für die Aufladeeinrichtung OBC, 12, 2,
- eine Steuereinrichtung 17, 18, die von außerhalb dieses Fahrgastraums durch einen Fahrer oder einen Beifahrer des Fahrzeugs bedienbar ist und einen Aufladebefehl an die Gleichstromsteuereinrichtung übermitteln kann, wobei diese Gleichstromsteuereinrichtung eine Vorrichtung zum Neutralisieren der Steuereinrichtung 17, 18 umfasst.
- einen Körper, der eine Öffnung umfasst, die in einer geschlossenen Stellung den Zugang zu diesem Fahrgastraum blockiert,
- ein Mittel zum Verriegeln der Öffnung in dieser geschlossenen Stellung,
wobei diese Neutralisierungsvorrichtung so konfiguriert ist, dass sie die Steuervorrichtung 17, 18 neutralisiert, wenn das Verriegelungsmittel die Öffnung in ihrer geschlossenen Stellung verriegelt.
**dadurch gekennzeichnet, dass** diese Neutralisierungsvorrichtung eine Zeitverzögerungsvorrichtung umfasst, die so konfiguriert ist, dass sie eine vorbestimmte Zeitverzögerung auslöst, wenn das Verriegelungsmittel die Öffnung in ihrer geschlossenen Position verriegelt, wobei diese Neutralisierungsvorrichtung so konfiguriert ist, dass sie die Steuervorrichtung 17, 18 neutralisiert, wenn diese Zeitverzögerung abgelaufen ist.

2. Kraftfahrzeug nach Anspruch 1, wobei diese Verzögerung eine Dauer von 5 bis 20 Sekunden, insbesondere 10 Sekunden beträgt.

3. Fahrzeug nach einem der vorhergehenden Ansprüche, wobei die Aufladesteuerung eine aus einem Satz von Steuerungen ist, der umfasst:
- eine Steuerung zum Aufschieben des Aufladens, - eine Steuerung zum sofortigen Aufladen, - eine Steuerung zum Stoppen des Aufladens, - eine Steuerung zum Entladen der Batterie .

4. Fahrzeug nach einem der vorhergehenden Ansprüche, wobei das betätigbare Steuergerät 17, 18 ein Taster ist.

5. Fahrzeug nach Anspruch 4, wobei dieser Knopf einer aus einem Satz von Knöpfen ist, der einen Berührungsknopf, einen Druckknopf und einen Mehrpositionsknopf umfasst.

6. Fahrzeug nach einem der vorhergehenden Ansprüche, wobei die OBC-Ladeeinrichtung 12, 2 eine Ladebuchse 12 umfasst, die zum Anschluss an ein terrestrisches Stromnetz 1 vorgesehen ist.

7. Fahrzeug nach Anspruch 6, wobei die OBC-Lademittel 12, 2 ein an diese Ladebuchse 12 angeschlossenes OBC-Ladegerät und ein elektrisches Verlängerungskabel 2 umfassen, das die Ladebuchse 12 mit dem terrestrischen Stromnetz 1 verbinden kann.

8. Fahrzeug nach einem der vorhergehenden Ansprüche, wobei dieses Fahrzeug einen Elektromotor MM1 umfasst, der von der elektrischen Energiespeicherbatterie BR1 angetrieben wird.

## Claims

1. Motor vehicle comprising:
- a passenger compartment,
- an electrical energy storage battery BR1,
- a recharging means for recharging the battery OBC, 12, 2,
- a DC control device for the recharging means OBC, 12, 2,
- a control device 17, 18 operable from outside this passenger compartment by a driver or a passenger of the vehicle, and capable of transmitting a recharging command to the DC control device, this DC control device comprising a device for neutralizing the control device 17, 18.
- a body comprising an opening having a closed position blocking access to this passenger compartment,
- a means for locking the opening in this closed position,
this neutralization device being configured so that it neutralizes the control device 17, 18 if the locking means locks the opening in its closed position.
**characterized in that** this neutralization device comprises a time delay device configured to trigger a predetermined time delay if the locking means locks the opening in its closed position, this neutralization device being configured so that it neutralizes the control device 17, 18 if this time delay has elapsed.

2. Motor vehicle according to claim 1, this delay being of a duration of 5 to 20 seconds, in particular 10 seconds.

3. Vehicle according to one of the preceding claims, the recharging control being one of a set of controls comprising:
- a deferred recharging control, - an immediate recharging control, - a recharging stop control, - a battery discharge control

4. Vehicle according to one of the preceding claims, the actuable control device 17, 18 being a button.

5. Vehicle according to claim 4, this button being one of a set of buttons comprising a touch button, a push button, a multi-position button.

6. Vehicle according to one of the preceding claims, the OBC charging means, 12, 2, comprising a charging socket 12 intended to be connected to a terrestrial electrical network 1.

7. Vehicle according to claim 6, the OBC charging means, 12, 2, comprising an on-board OBC charger connected to this charging socket 12, and an electrical extension cord 2 capable of connecting the charging socket 12 to the terrestrial electrical network 1.

8. Vehicle according to one of the preceding claims, this vehicle comprising an electric motor MM1 powered by the electric energy storage battery BR1.
